# EUROPÄISCHE PATENTANMELDUNG

(11) **EP 3 754 317 A1**
(43) Veröffentlichungstag der Anmeldung: **23.12.2020**
(21) Anmeldenummer: 20178516.9
(22) Anmeldetag: 05.06.2020
(51) Int. Cl.: G01L 9/00, G01L 19/00, G01L 19/14

(54) **VORRICHTUNG ZUM ERFASSEN EINES DRUCKS EINES FLUIDS**

(30) Priorität: 18.06.2019 DE 102019208867
(71) Anmelder: FRAUNHOFER-GESELLSCHAFT zur Förderung der angewandten Forschung e.V., 80686 München (DE)
(72) Erfinder: SCHIFFER, Dr. Michael, 13355 Berlin (DE); MACKOWIAK, Piotr, 13355 Berlin (DE); NGO, Prof. Dr. Ha-Duong, 13355 Berlin (DE)
(74) Vertreter: Pfenning, Meinig & Partner mbB

(57) **Zusammenfassung**

Die Erfindung betrifft eine Vorrichtung zum Erfassen eines Drucks eines Fluids, umfassend ein Gehäuse (1), einen mit dem Gehäuse (1) verbundenen Sensorträger (2), mindestens einen Drucksensor (3) und zumindest eine Komponente (4) einer elektrischen Schaltung, wobei der Sensorträger (2) einen ersten Bereich (7), der zur Aufnahme des Fluids vorgesehen und in dem der mindestens eine Drucksensor (3) angeordnet ist, räumlich von einem zweiten Bereich (8), in dem die zumindest eine Komponente (4) der elektrischen Schaltung angeordnet ist, trennt und Durchkontaktierungen (9) zwischen einer dem ersten Bereich (7) zugewandten ersten Oberfläche des Sensorträgers (2) und einer dem zweiten Bereich (8) zugewandten zweiten Oberfläche des Sensorträgers (2) aufweist, wobei die zumindest eine Komponente (4) der elektrischen Schaltung über die Durchkontaktierungen (9) elektrisch mit dem mindestens einen Drucksensor (3) gekoppelt ist, und wobei der mindestens eine Drucksensor (3) mittels Flip-Chip-Montage auf der ersten Oberfläche des Sensorträgers (2) montiert ist.

## Beschreibung

Die Erfindung betrifft eine Vorrichtung zum Erfassen eines Drucks eines Fluids gemäß dem Oberbegriff des Hauptanspruchs.

Drucksensoren finden in zahlreichen technologischen Bereichen Anwendung, von der Druckmessung im Öl eines Getriebes bis hin zur Luftdruckmessung in der Flugzeug- und Raketentechnik. Dabei können insbesondere durch das Schalten von Ventilen kurzzeitig sehr hohe Drücke entstehen, die die Zuverlässigkeit und Stabilität eines Drucksensors nachteilig beeinträchtigen können.

Beispielsweise können kurzzeitig auftretende hohe Drücke im Öl eines Automatik-Schaltgetriebes zum Bersten einer Biegeplatte des Drucksensors oder sogar zum Abreißen des Drucksensors von einem Sensorträger führen. In einem solchen Fall kann Öl aus dem Getriebe auslaufen, da typischerweise eine Medientrennung zwischen einem das Öl enthaltenden Bereich des Getriebes und weiteren Bereichen des Getriebes, in denen beispielsweise auch sensitive elektronische Bauteile angeordnet sein können, lediglich durch den Drucksensor selbst gewährleistet ist. Neben den eigentlichen Ölverlusten, kann eine solche Leckage auch zu dauerhaften Schäden weiterer Getriebe- bzw. Elektronikkomponenten führen.

In der Druckschrift US 5436491 A wird eine von einer Biegeplatte eines Drucksensors räumlich separierte Edelstahlmembran für eine zuverlässigere Medientrennung vorgeschlagen. Dabei wird der Druck des zu vermessenden Fluids zunächst auf die Edelstahlmembran ausgeübt und durch ein Übertragungsmedium, das zwischen der Edelstahlmembran und der Biegeplatte angeordnet ist, auf die Biegeplatte des Drucksensors übertragen. Eine solche Edelstahlmembran ist jedoch teuer, aufwendig zu integrieren und nur eingeschränkt zu miniaturisieren. Desweiteren können die notwendigen zusätzlichen Komponenten (Edelstahlmembran, Übertragungsmedium etc.) die Messgenauigkeit bzw. Messempfindlichkeit der Anordnung begrenzen.

Die Aufgabe der Erfindung besteht daher darin, eine Vorrichtung zur genauen Erfassung eines Drucks eines Fluids vorzuschlagen, die eine sichere und zuverlässige Medientrennung ermöglicht und dabei kostengünstig in kompakter Bauweise hergestellt werden kann.

Erfindungsgemäß wird die Aufgabe mit den im Anspruch 1 genannten Merkmalen gelöst. Vorteilhafte Varianten ergeben sich aus den in den Unteransprüchen genannten Merkmalen.

Die erfindungsgemäße Vorrichtung zum Erfassen eines Drucks eines Fluids umfasst ein Gehäuse, einen mit dem Gehäuse verbundenen Sensorträger, mindestens einen Drucksensor und zumindest eine Komponente einer elektrischen Schaltung. Dabei trennt der Sensorträger einen ersten Bereich, der zur Aufnahme des Fluids vorgesehen und in dem der mindestens eine Drucksensor angeordnet ist, räumlich von einem zweiten Bereich, in dem die zumindest eine Komponente der elektrischen Schaltung angeordnet ist. Der Sensorträger weist Durchkontaktierungen zwischen einer dem ersten Bereich zugewandten ersten Oberfläche des Sensorträgers und einer dem zweiten Bereich zugewandten zweiten Oberfläche des Sensorträgers auf. Desweiteren ist die zumindest eine Komponente der elektrischen Schaltung über die Durchkontaktierungen elektrisch mit dem mindestens einen Drucksensor gekoppelt. Zudem ist der mindestens eine Drucksensor mittels Flip-Chip-Montage auf der ersten Oberfläche des Sensorträgers angeordnet.

Mit der erfindungsgemäßen Vorrichtung wird eine sichere Medientrennung zwischen dem ersten und dem zweiten Bereich ermöglicht, da der mindestens eine Drucksensor mittels der Flip-Chip Montage direkt auf dem Sensorträger montiert ist und der erste Bereich von dem zweiten Bereich durch den Sensorträger selbst getrennt ist. Desweiteren wird eine besonders stabile und zuverlässige Verbindung zwischen dem mindestens einen Drucksensor und dem Sensorträger erreicht. Sollte der mindestens eine Drucksensor aufgrund kurzzeitig auftretender hoher Drücke dennoch abreißen, ist die Medientrennung durch den Sensorträger immer noch sicher gestellt. Das Fluid kann den zu vermessenden Druck zudem direkt, beispielsweise auf einer von dem Sensorträger abgewandten Oberfläche des mindestens einen Drucksensors, ausüben, wodurch die Messgenauigkeit und Messempfindlichkeit der Vorrichtung erhöht wird. Desweiteren kann eine kompakte Bauweise bzw. eine weitere Miniaturisierung erreicht werden, da der mindestens eine Drucksensor direkt auf dem Sensorträger aufliegt und kein Platz für zusätzliche Drahtbonds benötigt wird. Insbesondere kann die Vorrichtung so eingerichtet sein, dass der Druck des Fluids auf die dem Sensorträger abgewandte Oberfläche des Drucksensors erfasst werden kann.

Vorzugsweise ist ein den ersten Bereich umgebender Teil des Gehäuses offen, sodass der mindestens eine Drucksensor von einem außerhalb des Gehäuses liegenden Außenbereich aus für das Fluid zugänglich ist. In diesem Fall kann der mindestens eine Drucksensor auch innerhalb des Gehäuses angeordnet sein. Alternativ kann der erste Bereich außerhalb des Gehäuses liegen, sodass auch in diesem Fall der mindestens eine Drucksensor von einem außerhalb des Gehäuses liegenden Außenbereich aus für das Fluid zugänglich ist. Beispielsweise kann der Sensorträger auch einen Abschluss des Gehäuses bilden. Das Gehäuse selbst kann Teil eines Getriebes oder einer Messvorrichtung sein.

Die elektrische Schaltung kann eine Auswerteeinheit - oder ein Teil davon - sein, mit der Ausgangssignale des Drucksensors ausgewertet und der Druck des Fluids bestimmt werden können. Die zumindest eine Komponente der elektrischen Schaltung kann mindestens ein elektronisches Bauteil umfassen, wobei das mindestens eine elektronische Bauteil auf der zweiten Oberfläche des Sensorträgers angeordnet sein kann. Vorzugsweise kann die zumindest eine Komponente der elektrischen Schaltung mittels einer Flip-Chip Montage auf der zweiten Oberfläche des Sensorträgers angeordnet bzw. mit dieser verbunden sein. Das mindestens eine elektronische Bauteil kann ein integrierter Schaltkreis, eine anwendungsspezifische integrierte Schaltung (im Englischen als "application-specific integrated circuit" (ASIC) bezeichnet), eine Regler- oder Steuereinheit, eine Auswerte- oder Messeinheit, aber auch eine Rechen- oder Speichereinheit sein. Die elektrische Schaltung kann auch weitere Komponenten, beispielsweise eine elektrische Steck- oder Kontaktverbindung oder ein oder mehrere passive Bauelemente umfassen. Auch diese können zumindest zum Teil auf der zweiten Oberfläche des Sensorträgers angeordnet sein.

Der Sensorträger kann eine Leiterplatte (im Englischen als "printed circuit board" (PCB) bezeichnet) oder ein Keramikträger sein. Vorzugsweise kann der Sensorträger mittels mindestens einer Klebstoff- oder Lotverbindung mit dem Gehäuse verbunden sein. Zusätzlich kann der Sensorträger im Bereich der Klebstoff- oder Lotverbindung eine separate Dichtung aufweisen. Die separate Dichtung kann zumindest teilweise in dem ersten Bereich angeordnet sein.

Der mindestens eine Drucksensor kann mindestens einen Kontaktierhügel aufweisen, wobei der mindestens eine Kontaktierhügel mit der ersten Oberfläche des Sensorträgers verbunden und mit einer der Durchkontaktierungen des Sensorträgers elektrisch gekoppelt ist. Insbesondere kann der mindestens eine Kontaktierhügel mittels einer Lot- oder Schweißverbindung oder einer elektrisch leitfähigen Klebstoffverbindung mit der ersten Oberfläche des Sensorträgers verbunden sein.

Vorteilhaft wirkt es sich aus, wenn der mindestens eine Drucksensor einen Lötrahmen aufweist, der den mindestens einen Kontaktierhügel umgeben und mit der ersten Oberfläche des Sensorträgers verbunden sein kann. Der Lötrahmen kann insbesondere eine Abschirmung des mindestens einen Kontaktierhügels und/oder weiterer Komponenten des mindestens einen Drucksensors von dem Fluid ermöglichen. Vorzugsweise kann der Lötrahmen so dimensioniert und an dem Sensorträger angeordnet sein, dass das Fluid nicht in den mindestens einen Drucksensor eindringen kann. Insbesondere kann der Lötrahmen und/oder der mindestens eine Drucksensor so ausgebildet sein, dass keine elektrisch leitenden Verbindungen, die mit der elektrischen Schaltung bzw. den Durchkontaktierungen des Sensorträgers elektrisch gekoppelt sind, dem Fluid zugänglich sind.

Der mindestens eine Drucksensor kann ein Halbleiter-Drucksensor, vorzugsweise ein Silizium-Drucksensor, sein. Alternativ oder zusätzlich kann der mindestens eine Drucksensor ein Substrat, eine auf oder an dem Substrat angeordnete Biegeplatte und mindestens ein mit der Biegeplatte verbundenes Piezoelement aufweisen. Dabei kann die Biegeplatte an einer dem Sensorträger abgewandten Oberfläche des Substrats angeordnet sein. Das mindestens eine Piezoelement kann an einer dem Substrat zugewandten Oberfläche der Biegeplatte angeordnet sein. Das Substrat und/oder die Biegeplatte können/kann zumindest teilweise aus einem Halbleiter, vorzugsweise Silizium oder ein Silizium enthaltender Halbleiter, gebildet sein. Besonders vorzugsweise weist das Substrat eine Dicke zwischen 100 µm und 250 µm auf. Die Biegeplatte kann z.B. eine Dicke zwischen 20 µm und 40 µm aufweisen.

Das mindestens eine Piezoelement kann durch eine Dotierung eines Teilbereichs der Biegeplatte gebildet sein. So kann ein Druck, der von dem Fluid auf die Biegeplatte ausgeübt wird und zu einer Verformung, beispielsweise einer Verbiegung oder Dehnung, der Biegeplatte führt auch eine entsprechende Verformung des mindestens einen Piezoelements zur Folge haben. Eine solche Verformung kann mindestens eine elektrische Eigenschaft des mindestens einen Piezoelements verändern. Diese Veränderung der mindestens einen elektrischen Eigenschaft kann beispielsweise mit einer elektronischen Auswerteeinheit, die durch die elektrische Schaltung gebildet oder mit der elektrischen Schaltung elektrisch gekoppelt sein kann, ausgewertet werden. Beispielsweise kann das Piezoelement ein Piezowiderstand sein, wobei die mindestens eine elektrische Eigenschaft durch den ohmschen Widerstand des Piezowiderstands gegeben sein kann.

Ein einfacher Aufbau des Drucksensors ergibt sich, wenn das Substrat Durchkontaktierungen zwischen der dem Sensorträger abgewandten Oberfläche des Substrats und einer dem Sensorträger zugewandten Oberfläche des Substrats aufweist. An der dem Sensorträger zugewandten Oberfläche des Substrats können die Durchkontaktierungen des Substrats mit dem mindestens einen Kontaktierhügel elektrisch gekoppelt sein. Auf der anderen Seite können in einem Bereich der Biegeplatte Metallisierungen der Durchkontaktierungen des Substrats Metall-Halbleiter Kontakte mit mindestens einer Kontaktdotierung bilden. Beispielsweise kann auch die mindestens eine Kontaktdotierung durch eine Dotierung eines Teilbereichs der Biegeplatte oder durch eine auf einer Oberfläche der Biegeplatte angeordnete Dotierungsschicht gebildet sein. Die mindestens eine Kontaktdotierung kann mit dem mindestens einen Piezoelement elektrisch gekoppelt sein.

Das mindestens eine Piezoelement und die mindestens eine Kontaktdotierung können sich durch einen unterschiedlich hohen Dotierungsgrad unterscheiden. Vorzugsweise kann das mindestens eine Piezoelement normal dotiert und die mindestens eine Kontaktdotierung stark dotiert sein. Dadurch kann die mindestens eine Kontaktdotierung einen besonders guten ohmschen Kontakt zu den Durchkontaktierungen des Substrats bilden. Beispielsweise kann das mindestens eine Piezoelement normal positiv dotiert (p-Dotierung) und die mindestens eine Kontaktdotierung stark positiv dotiert (p⁺-Dotierung) sein, während zumindest der umgebende Teilbereich der Biegeplatte normal negativ (n-Dotierung) dotiert sein kann. Durch die Anordnung der dotierten Bereiche an der dem Substrat zugewandten Oberfläche der Biegeplatte kann auch eine zusätzliche elektrische Abschirmung der elektrisch leitenden Komponenten des mindestens einen Drucksensors entfallen, da die Biegeplatte oder das Substrat selbst eine solche elektrische Abschirmung bilden kann.

Besonders vorteilhaft kann der mindestens eine Drucksensor mit Materialiengebildet sein, die inert und kompatibel mit dem Fluid sind. Der mindestens eine Drucksensor kann auch an einer dem Substrat abgewandten Oberfläche der Biegeplatte eine erste Passivierungsschicht aufweisen, wobei die erste Passivierungsschicht eine äußere Oberfläche des mindestens einen Drucksensors bilden kann. Dadurch können die Biegeplatte und weitere Komponenten des mindestens einen Drucksensors vor einer nachteiligen chemischen Beeinflussung durch das Fluid, beispielsweise eine unerwünschten Korrosion, geschützt werden. Desweiteren kann der mindestens eine Drucksensor an der dem Substrat zugewandten Oberfläche der Biegeplatte, und/oder der mindestens einen Kontaktdotierung und/oder des mindestens einen Piezoelements eine zweite Passivierungsschicht aufweisen. Die erste und/oder zweite Passivierungsschicht kann eine Oxid- oder Nitrierschicht sein. Eine zusätzliche Passivierung des mindestens einen Drucksensors kann auch durch das Bedampfen mit Parylenen erreicht werden.

Die erste und/oder die zweite Passivierungsschicht können/kann auch mehrere Lagen aufweisen. Zumindest eine Lage der ersten oder zweiten Passivierungsschicht kann mit unterschiedlichen Teilbereichen gebildet sein. Beispielsweise kann ein erster Teilbereich mit Siliziumdioxid zur Passivierung und ein zweiter Teilbereich mit Siliziumnitrid zur Passivierung gebildet sein. Insbesondere kann die zweite Passivierungsschicht auch Aussparungen, beispielsweise Löcher oder Schlitze, aufweisen, um eine Ausbildung der Metall-Halbleiter Kontakte zu ermöglichen.

Der mindestens eine Drucksensor kann ein Absolutdrucksensor sein und einen geschlossenen Hohlraum als Referenzvakuum aufweisen. Der geschlossene Hohlraum kann mit einem Referenzfluid, z.B. Luft, gefüllt sein oder unter Vakuum stehen. Der Druck des Referenzvakuums kann präzise gemessen und bei der Auswertung der Ausgangssignale des mindestens einen Drucksensors berücksichtigt werden.

Vorzugsweise ist der geschlossene Hohlraum zwischen dem Substrat und der Biegeplatte angeordnet. Besonders vorteilhaft ist es, wenn eine innere Wandung des geschlossenen Hohlraums von einem Teilbereich einer Oberfläche des Substrats und einem Teilbereich einer dem Substrat zugewandten Oberfläche der zweiten Passivierungsschicht gebildet ist.

Vorzugsweise weist das Substrat auch Ausnehmungen zur Kompensation von mechanischen oder thermischen Belastungen auf, wobei die Ausnehmungen den geschlossenen Hohlraum umgeben können. Beispielsweise können solche Belastungen durch die Flip-Chip Montage des mindestens einen Drucksensors verursacht werden. Vorzugsweise können die Ausnehmungen durch ein reaktives lonentiefenätzen (im Englischen als "deep reactive ion etching" (DRIE) bezeichnet) in dem Substrat ausgebildet werden.

Die Erfindung umfasst auch ein Verfahren zum Erfassen eines Drucks eines Fluids mit der oben beschriebenen Vorrichtung.

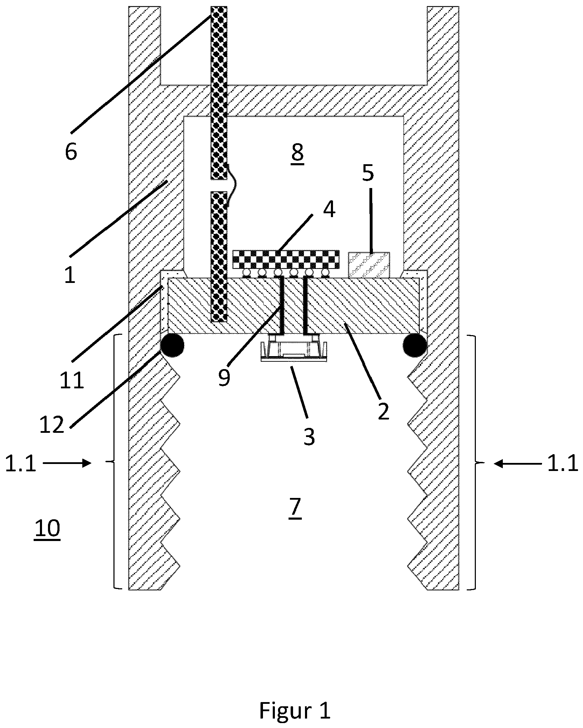

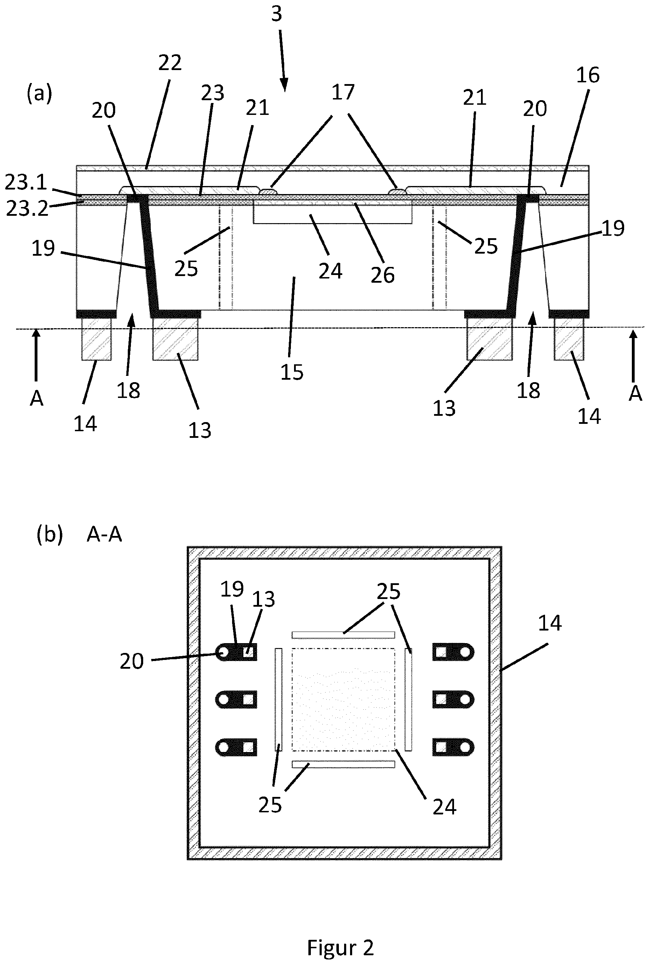

Ein Ausführungsbeispiel der Erfindung ist in den Zeichnungen dargestellt und wird nachfolgend anhand der Figuren 1 und 2 erläutert.

Dabei zeigen:
Fig. 1 einen Längsschnitt durch eine Vorrichtung mit einem in einem Gehäuse angeordneten Sensorträger und einem Drucksensor,
Fig. 2a eine Detailansicht des entsprechend geschnitten dargestellten Drucksensors,
Fig. 2b einen Querschnitt durch den Drucksensor entlang der Schnittlinie A-A entsprechend Fig. 2a.

Figur 1 zeigt eine Vorrichtung zum Erfassen eines Drucks eines Fluids mit einem Gehäuse 1, einen mit dem Gehäuse verbundenen Sensorträger 2, einen Drucksensor 3 und eine Komponente 4 einer elektrischen Schaltung. Darüberhinaus sind in Figur 1 noch zwei weitere Komponenten 5, 6 der elektrischen Schaltung gezeigt (elektrische Verbindungen zwischen der Komponente 4 und den weiteren Komponenten 5, 6 der elektrischen Schaltung sind der besseren Übersichtlichkeit halber nicht gezeigt). Dabei trennt der Sensorträger 2 einen ersten Bereich 7, der zur Aufnahme des Fluids vorgesehen und in dem der Drucksensor 3 angeordnet ist, räumlich von einem zweiten Bereich 8, in dem die Komponente 4 der elektrischen Schaltung angeordnet ist. Der Sensorträger 2 weist Durchkontaktierungen 9 zwischen einer dem ersten Bereich 7 zugewandten ersten Oberfläche des Sensorträgers 2 und einer dem zweiten Bereich 8 zugewandten zweiten Oberfläche des Sensorträgers 2 auf. Desweiteren ist die eine Komponente 4 der elektrischen Schaltung über die Durchkontaktierungen 9 elektrisch mit dem Drucksensor 3 gekoppelt. Zudem ist der Drucksensor 3 mittels Flip-Chip-Montage auf der ersten Oberfläche des Sensorträgers 2 montiert. Die Vorrichtung ist dabei so eingerichtet, dass der Druck des Fluids auf die dem Sensorträger 2 abgewandte Oberfläche des Drucksensors 3 erfasst werden kann.

In Figur 1 ist ein den ersten Bereich 7 umgebender Teil 1.1 des Gehäuses 1 offen, sodass der Drucksensor 3 von einem außerhalb des Gehäuses 1 liegenden Außenbereich 10 aus für das Fluid zugänglich ist. Der Drucksensor 3 ist innerhalb des Gehäuses 1 angeordnet. Bei einer Abwandlung des gezeigten Ausführungsbeispiels kann der umgebende Teil 1.1 des Gehäuses 1 auch weggelassen werden, sodass der Sensorträger 2 einen Abschluss des Gehäuses 1 bildet und der Drucksensor 3 außerhalb des Gehäuses 1 angeordnet ist.

Die Komponente 4 der elektrischen Schaltung ist eine anwendungsspezifische integrierte Schaltung (im Englischen als "application-specific integrated circuit" (ASIC) bezeichnet), die auf der zweiten Oberfläche des Sensorträgers 2 angeordnet ist. Die anwendungsspezifische integrierte Schaltung ist als Teil einer Auswerteeinheit eingerichtet, um Ausgangssignale des Drucksensors 3 auszuwerten und den Druck des Fluids zu bestimmen.

Die anwendungsspezifische integrierte Schaltung ist mittels einer Flip-Chip Montage auf der zweiten Oberfläche des Sensorträgers 2 angeordnet. Die weiteren Komponenten 5, 6 der elektrischen Schaltung sind durch einen Stecker 5 und ein passives Bauteil 6 gegeben.

Der Sensorträger 2 ist eine Leiterplatte 2 und mittels einer Klebstoffverbindung 11 mit dem Gehäuse 1 verbunden. Zusätzlich weist der Sensorträger 2 im Bereich der Klebstoffverbindung 11 eine separate Dichtung 12 auf, die in dem ersten Bereich 7 angeordnet ist.

Figur 2a zeigt Details des geschnitten dargestellten Drucksensors 3. Wiederkehrende Merkmale sind in dieser Figur wie auch in den folgenden Figuren mit identischen Bezugszeichen versehen. Dabei weist der Drucksensor 3 mehrere Kontaktierhügel 13 auf, die mit der ersten Oberfläche des Sensorträgers 2 mittels einer Lotverbindung verbunden und mit einer der Durchkontaktierungen 9 des Sensorträgers 2 elektrisch gekoppelt sind. Der Drucksensor 3 weist auch einen Lötrahmen 14 auf, der die Kontaktierhügel 13 umgibt und mit der ersten Oberfläche des Sensorträgers 2 verbunden ist.

Der Drucksensor 3 ist ein Silizium-Drucksensor 3, der ein Substrat 15, eine auf dem Substrat 15 angeordnete Biegeplatte 16 und mehrere mit der Biegeplatte 16 verbundene Piezowiderstände 17 aufweist. Die Biegeplatte 16 ist an der dem Sensorträger 2 abgewandten Oberfläche des Substrats 15 angeordnet. Die Piezowiderstände 17 sind an der dem Substrat 15 zugewandten Oberfläche der Biegeplatte 16 angeordnet. Das Substrat 15 und die Biegeplatte 16 sind mit Silizium gebildet. Das Substrat 15 weist eine Dicke von etwa 150 µm und die Biegeplatte 16 eine Dicke von etwa 30 µm auf.

Das Substrat 15 weist auch Durchkontaktierungen 18 zwischen der dem Sensorträger 2 abgewandten Oberfläche des Substrats 15 und der dem Sensorträger 2 zugewandten Oberfläche des Substrats 15 auf. An der dem Sensorträger 2 zugewandten Oberfläche des Substrats 15 sind die Durchkontaktierungen 18 des Substrats 15 mit den Kontaktierhügeln 13 elektrisch gekoppelt. Auf der anderen Seite bilden in einem Bereich der Biegeplatte 16 Metallisierungen 19 der Durchkontaktierungen 18 des Substrats 15 Metall-Halbleiter Kontakte 20 mit mehreren Kontaktdotierungen 21. Die Kontaktdotierungen 21 sind durch eine p⁺-Dotierung eines Teilbereichs der Biegeplatte 16 gebildet und mit den Piezowiderständen 17 elektrisch gekoppelt. Der die Piezowiderstände 17 und die Kontakdotierungen 21 umgebende Teilbereich der Biegeplatte 16 ist dabei normal negativ dotiert.

Der Drucksensor 3 weist an der dem Substrat 15 abgewandten Oberfläche der Biegeplatte 16 eine erste Passivierungsschicht 22, die mit Siliziumnitrit gebildet ist, auf. Die erste Passivierungsschicht 22 bildet dabei eine äußere Oberfläche des Drucksensors 3, auf der der zu erfassende Druck durch das Fluid ausgeübt werden kann. Desweiteren weist der Drucksensor 3 an der dem Substrat 15 zugewandten Oberfläche der Biegeplatte 16, der Kontaktdotierungen 21 und der Piezowiderstände 17 eine zweite Passivierungsschicht 23 auf, die aus einer ersten 23.1 und einer zweiten 23.2 Lage besteht. Die erste Lage 23.1 ist mit Siliziumdioxid gebildet und an einer dem Substrat 15 zugewandten Oberfläche der Biegeplatte 16, der Kontaktdotierungen 21 und der Piezowiderstände 17 angeordnet. Die zweite Lage 23.2 ist an der dem Substrat 15 zugewandten Oberfläche der ersten Lage 23.1 angeordnet und in einem Teilbereich 26 mit Siliziumnitrid und ansonsten mit Siliziumdioxid gebildet. Die zweite Passivierungsschicht 23 weist zudem auch Aussparungen zur Ausbildung der Metall-Halbleiter Kontakte 20 auf.

Der Drucksensor 3 ist ein Absolutdrucksensor 3 und weist einen mit Luft befüllten, geschlossenen Hohlraum 24 als Referenzvakuum auf. Der geschlossene Hohlraum 24 ist dabei zwischen dem Substrat 15 und der Biegeplatte 16 angeordnet. Eine innere Wandung des geschlossenen Hohlraums 24 wird von einem Teilbereich der Oberfläche des Substrats 15 und einem Teilbereich 26 der dem Substrat 15 zugewandten Oberfläche der zweiten Passivierungsschicht 23 gebildet. Zusätzlich weist das Substrat 15 Ausnehmungen 25 zur Kompensation von mechanischen oder thermischen Belastungen auf.

In Figur 2b ist gezeigt, wie die Ausnehmungen 25 den geschlossenen Hohlraum 24 nahezu vollständig umschließen, wobei die Position des geschlossenen Hohlraums 24 an der dem Sensorträger 2 abgewandten Oberfläche des Substrats 15 in Figur 2b durch eine gestrichelte Linie lediglich angedeutet ist. Desweiteren sind der Lötrahmen 14 und sechs Kontaktierhügel 13 sowie Metallisierungen 19 und Metall-Halbleiter Kontakte 20 der Durchkontaktierungen 18 gezeigt.

## Patentansprüche

1. Vorrichtung zum Erfassen eines Drucks eines Fluids, umfassend ein Gehäuse (1), einen mit dem Gehäuse (1) verbundenen Sensorträger (2), mindestens einen Drucksensor (3) und zumindest eine Komponente (4) einer elektrischen Schaltung,
wobei der Sensorträger (2) einen ersten Bereich (7), der zur Aufnahme des Fluids vorgesehen und in dem der mindestens eine Drucksensor (3) angeordnet ist, räumlich von einem zweiten Bereich (8), in dem die zumindest eine Komponente (4) der elektrischen Schaltung angeordnet ist, trennt und Durchkontaktierungen (9) zwischen einer dem ersten Bereich (7) zugewandten ersten Oberfläche des Sensorträgers (2) und einer dem zweiten Bereich (8) zugewandten zweiten Oberfläche des Sensorträgers (2) aufweist,
wobei die zumindest eine Komponente (4) der elektrischen Schaltung über die Durchkontaktierungen (9) elektrisch mit dem mindestens einen Drucksensor (3) gekoppelt ist,
**dadurch gekennzeichnet,**
**dass** der mindestens eine Drucksensor (3) mittels Flip-Chip-Montage auf der ersten Oberfläche des Sensorträgers (2) montiert ist.

2. Vorrichtung nach einem der vorhergehenden Ansprüche, **dadurch gekennzeichnet, dass** ein den ersten Bereich (7) umgebender Teil (1.1) des Gehäuses (1) offen ist oder der erste Bereich (7) außerhalb des Gehäuses (1) liegt, sodass der mindestens eine Drucksensor (3) von einem außerhalb des Gehäuses (1) liegenden Außenbereich (10) aus für das Fluid zugänglich ist.

3. Vorrichtung nach einem der vorhergehenden Ansprüche, **dadurch gekennzeichnet, dass** die zumindest eine Komponente (4) der elektrischen Schaltung mindestens ein elektronisches Bauteil umfasst, das auf der zweiten Oberfläche des Sensorträgers (2) angeordnet ist.

4. Vorrichtung nach einem der vorhergehenden Ansprüche, **dadurch gekennzeichnet, dass** der Sensorträger (2) eine Leiterplatte oder ein Keramikträger ist und/oder mittels mindestens einer Klebstoffverbindung (11) mit dem Gehäuse (1) verbunden ist.

5. Vorrichtung nach einem der vorhergehenden Ansprüche, **dadurch gekennzeichnet, dass** der mindestens eine Drucksensor (3) mindestens einen Kontaktierhügel (13) aufweist, wobei der mindestens eine Kontaktierhügel (13) mit der ersten Oberfläche des Sensorträgers (2) verbunden und mit einer der Durchkontaktierungen (9) des Sensorträgers (2) elektrisch gekoppelt ist.

6. Vorrichtung nach Anspruch 5, **dadurch gekennzeichnet, dass** der mindestens eine Drucksensor (3) einen Lötrahmen (14) aufweist, der den mindestens einen Kontaktierhügel (13) umgibt und mit der ersten Oberfläche des Sensorträgers (2) verbunden ist.

7. Vorrichtung nach einem der vorhergehenden Ansprüche, **dadurch gekennzeichnet, dass** der mindestens eine Drucksensor (3) ein Halbleiter-Drucksensor (3) ist und/oder dass der mindestens eine Drucksensor (3) ein Substrat (15), eine auf dem Substrat (15) angeordnete Biegeplatte (16) und mindestens ein mit der Biegeplatte (16) verbundenes Piezoelement (17) aufweist.

8. Vorrichtung nach Anspruch 7, **dadurch gekennzeichnet, dass** die Biegeplatte (16) an einer dem Sensorträger (2) abgewandten Oberfläche des Substrats (15) und/oder das mindestens eine Piezoelement (17) an einer dem Substrat (15) zugewandten Oberfläche der Biegeplatte (16) angeordnet ist.

9. Vorrichtung nach Anspruch 8, **dadurch gekennzeichnet, dass** das Substrat (15) Durchkontaktierungen (18) zwischen der dem Sensorträger (2) abgewandten Oberfläche des Substrats (15) und einer dem Sensorträger (2) zugewandten Oberfläche des Substrats (15) aufweist, wobei Metallisierungen (19) der Durchkontaktierungen (18) in einem Bereich der Biegeplatte (16) Metall-Halbleiter Kontakte (20) mit mindestens einer Kontaktdotierung (21) bilden, wobei die mindestens eine Kontaktdotierung (21) an der dem Substrat (15) zugewandten Oberfläche der Biegeplatte (16) angeordnet und mit dem mindestens einen Piezoelement (17) elektrisch gekoppelt ist.

10. Vorrichtung nach Anspruch 8 oder 9, **dadurch gekennzeichnet, dass** der Drucksensor (3) an einer dem Substrat (15) abgewandten Oberfläche der Biegeplatte (16) eine erste Passivierungsschicht (22) aufweist, die eine äußere Oberfläche des Drucksensors (3) bildet, und/oder dass der Drucksensor (3) an der dem Substrat (15) zugewandten Oberfläche der Biegeplatte (16) und/oder der mindestens einen Kontaktdotierung (21) und/oder des mindestens einen Piezoelements (17) eine zweite Passivierungsschicht (23) aufweist.

11. Vorrichtung nach einem der vorhergehenden Ansprüche, **dadurch gekennzeichnet, dass** der mindestens eine Drucksensor (3) ein Absolutdrucksensor ist, der einen geschlossenen Hohlraum (24) als Referenzvakuum aufweist.

12. Vorrichtung nach Anspruch 11, sofern dieser auf Anspruch 7 rückbezogen ist, **dadurch gekennzeichnet, dass** der geschlossene Hohlraum (24) zwischen dem Substrat (15) und der Biegeplatte (16) angeordnet ist.

13. Vorrichtung nach Anspruch 12, **dadurch gekennzeichnet, dass** das Substrat (15) Ausnehmungen (25) zur Kompensation von mechanischen Belastungen aufweist, wobei die Ausnehmungen (25) den geschlossenen Hohlraum (24) umgeben.

14. Vorrichtung nach einem der Ansprüche 11 bis 13, sofern diese auf Anspruch 10 rückbezogen sind, **dadurch gekennzeichnet, dass** eine innere Wandung des geschlossenen Hohlraums (24) von einem Teilbereich einer Oberfläche des Substrats (15) und einer dem Substrat (15) zugewandten Oberfläche der zweiten Passivierungsschicht (23) gebildet ist.

15. Verfahren zum Erfassen eines Drucks eines Fluids, **dadurch gekennzeichnet dass** das Verfahren mit einer Vorrichtung nach einem der vorhergehenden Ansprüche durchgeführt wird.
